# EUROPEAN PATENT SPECIFICATION

(11) **EP 4 265 478 B1**
(45) Date of publication and mention of the grant of the patent: **04.12.2024**
(21) Application number: 23162370.3
(22) Date of filing: 16.03.2023
(51) Int. Cl.: B60Q 1/26, B60Q 1/30, B60R 13/10, B60Q 1/56

(54) **IMPROVED MODULAR LIGHT BRACKET GROUP AND RELATED MOUNTING METHOD**
VERBESSERTE MODULARE LICHTHALTERUNGSGRUPPE UND ENTSPRECHENDES MONTAGEVERFAHREN
GROUPE DE SUPPORT D'ÉCLAIRAGE MODULAIRE AMÉLIORÉ ET PROCÉDÉ DE MONTAGE ASSOCIÉ

(30) Priority: 19.04.2022 IT 202200007709
(43) Date of publication of application: 25.10.2023
(73) Proprietor: Lokhen S.r.l., 70022 Altamura, Bari (IT)
(72) Inventor: GRECO, Luca Oronzo, I-70022 Altamura, BARI (IT); BARATTINI, Daniele, I-70022 Altamura, BARI (IT)
(74) Representative: Mitola, Marco

(56) References cited:
- EP-A1- 2 431 236
- EP-B1- 0 764 560
- FR-A1- 2 735 733
- US-A- 3 083 292

## Description

### FIELD OF APPLICATION

The present invention relates to an improved light bracket group, in particular for industrial vehicles such as trucks, lorries, trailers, vans, and the like, and the related mounting method.

### BACKGROUND ART

There are several solutions of light bracket groups in the prior art, which are mounted to the rear part of industrial vehicles, such as trucks, lorries, trailers, vans, and the like.

Said light bracket groups comprise both the supports of the rear lights of the vehicle, usually arranged at the side ends of the group so as to integrate the position, braking and direction signalling functions, while having the vehicle plate with related lighting devices in the central position.

Such known solutions can be in one piece, i.e., consisting of a single module which is fixed to the chassis of the vehicle by specific support brackets.

Such a solution results in certain disadvantages given that it requires manufacturing a single module by moulding in one piece. This is complex to obtain in terms of the mould and is also expensive because it includes preparing a custom-made mould for every possible size of the light bracket group. Indeed, the industrial vehicles mentioned can have different transverse widths, therefore a mould for each width needs to be provided.

Moreover, in case of even partial breaking of the group, said known single-piece solutions result in the need to replace the entire group.

Moreover, such single-piece solutions require to disassemble the entire group from the vehicle chassis also in case of maintenance.

Solutions of light bracket groups in several parts are also known, in particular a central structural portion supporting the plate and the related lighting devices, and two side portions, each supporting the rear lights with position, braking, and direction signalling functions.

The aforesaid solutions are not free from drawbacks and limitations.

In particular, such solutions provide for the central structural portion to be sturdy, and thus heavy, while the side portions are relatively lightweight and flexible.

This cause the group to be heavy overall and the side portions, being lighter and cantilevered, tend to vibrate significantly during the travel of the vehicle. In addition to causing bothersome noises, such vibrations can result in the formation of cracks and breaks in the long run.

Moreover, the known solutions are not modular and adjustable given that they provide for making specific sizes of side portions which are fixed to the central portion in a unique, non-adjustable manner. This means that, in any case, in order to change the size of the light bracket, different sizes, i.e., widths, of the central portion and/or the side portions need to be made, typically by moulding. Solutions according to cited prior art are disclosed, for example, by FR 2735733 A1.

### PRESENTATION OF THE INVENTION

Therefore, the need is felt to solve the drawbacks and limitations mentioned with reference to the prior art.

Such a need is met by a light bracket group according to claim 1 and by methods for mounting a light bracket group according to claims 9, 10 and 11.

### DESCRIPTION OF THE DRAWINGS

Further features and advantages of the present invention will become more comprehensible from the following description of preferred embodiments thereof, given by way of non-limiting examples, in which:

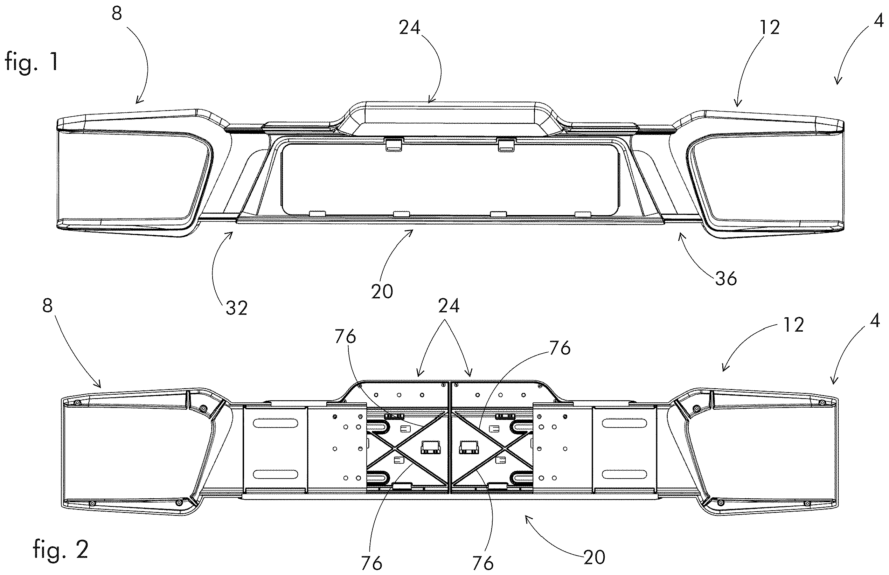

Figure 1 is a front view, in an assembled configuration, of a light bracket group according to an embodiment of the present invention;
Figure 2 is a rear view of the light bracket group in Figure 1;

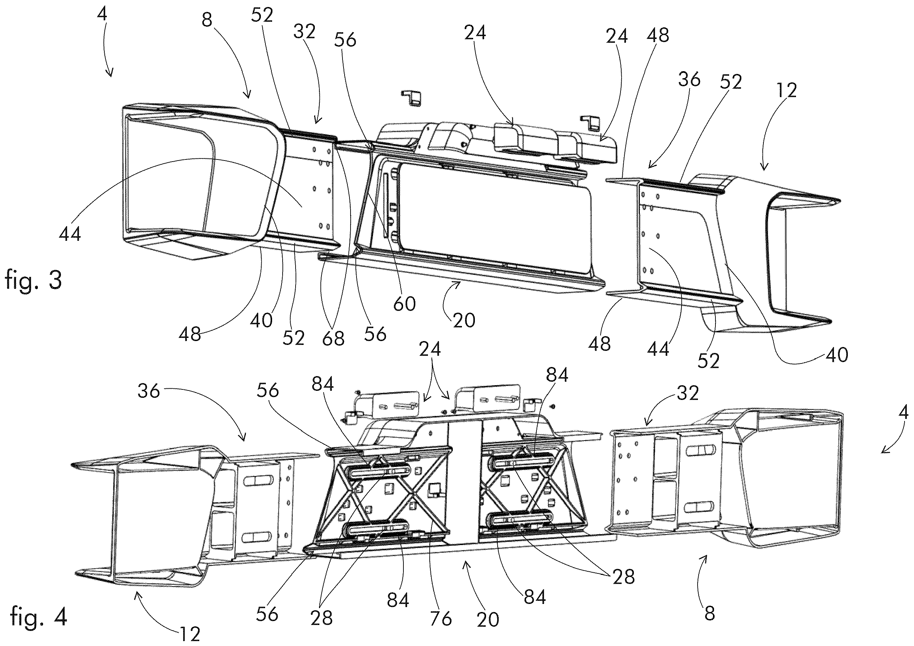

Figure 3 is a front view, in an exploded configuration, of the light bracket group in Figure 1;
Figure 4 is a rear view, in an exploded configuration, of the light bracket group in Figure 1;

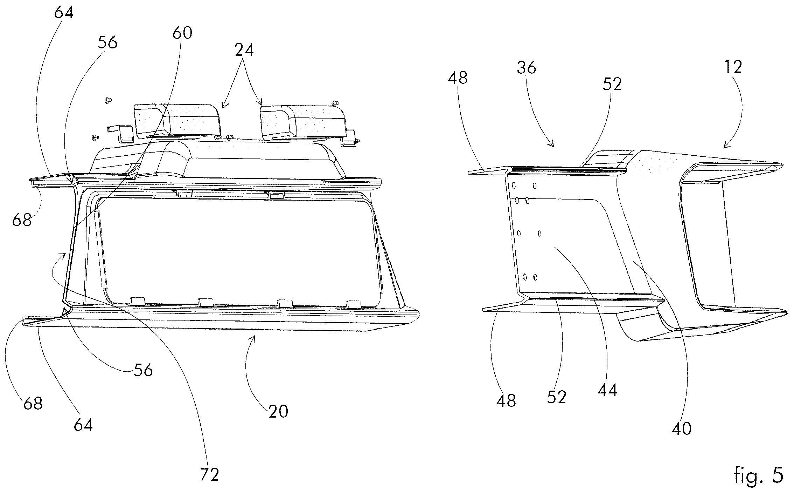

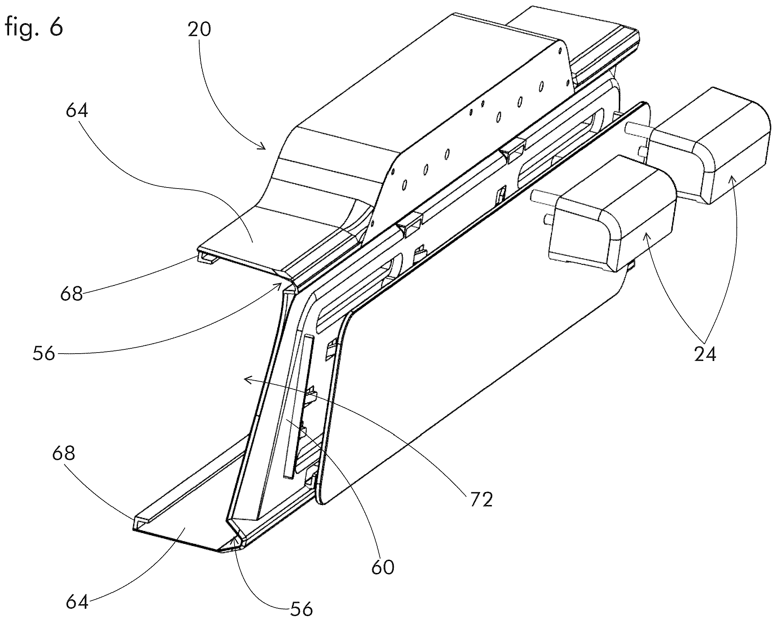

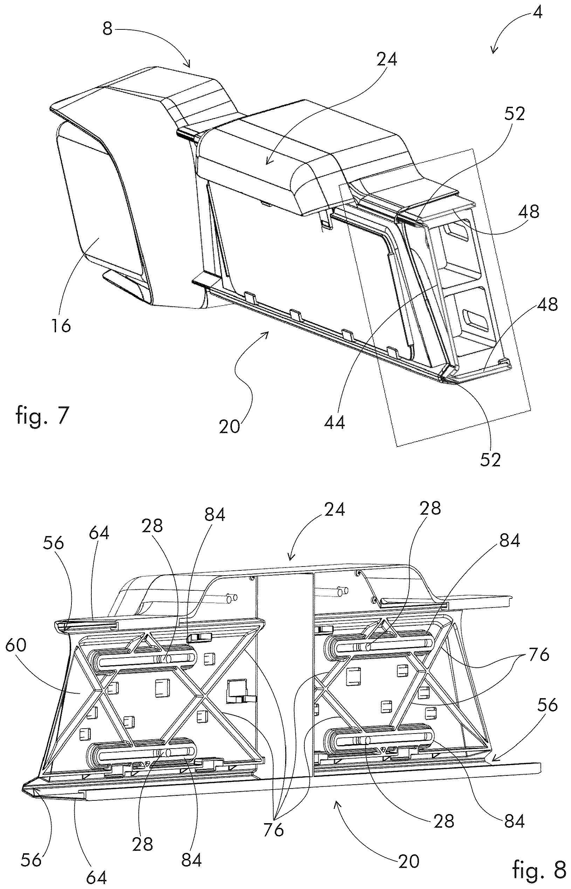

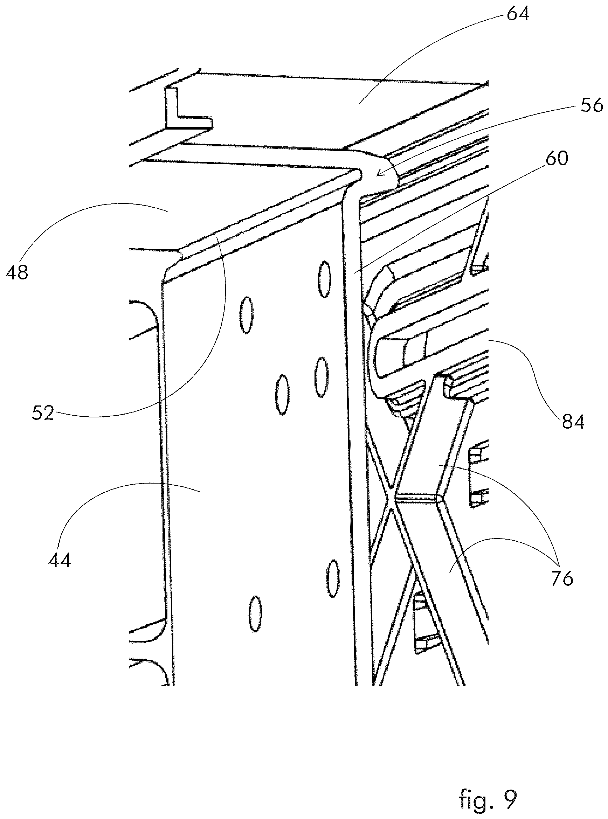

Figures 5-9 are enlarged perspective views of details of the light bracket group in Figure 1;
Figures 10-12 are perspective views of a possible mounting sequence of a light bracket group according to an embodiment of the present invention;
Figures 13-15 are perspective views of a further possible mounting sequence of a light bracket group according to an embodiment of the present invention;

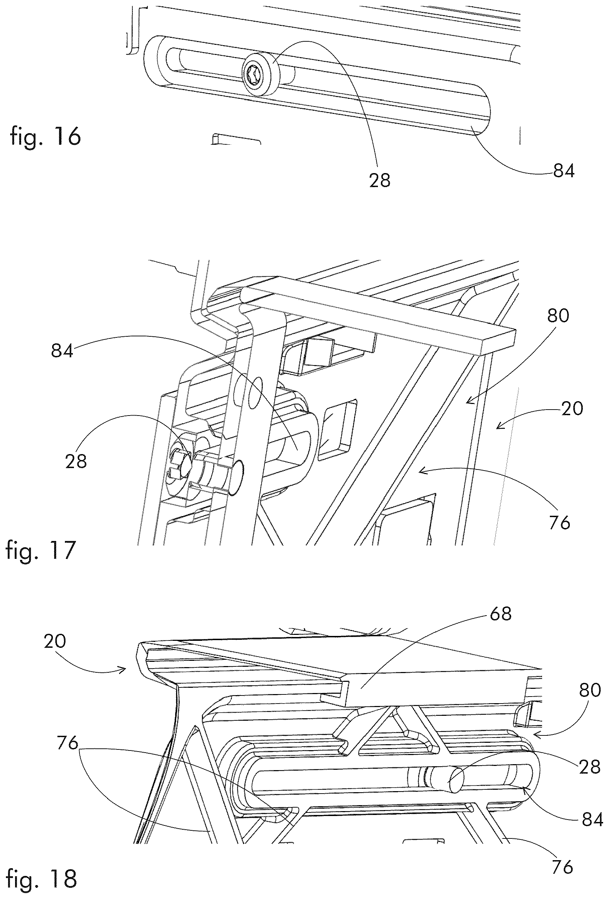

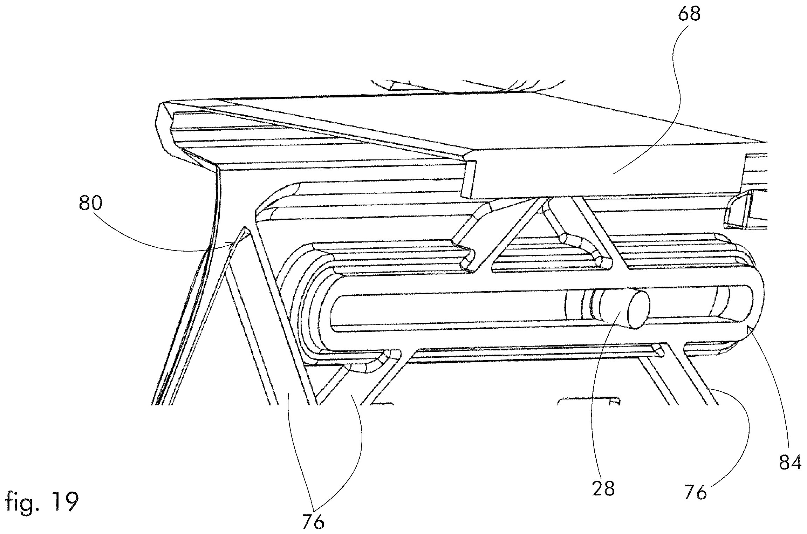

Figures 16-19 are perspective views of details of a light bracket group according to an embodiment of the present invention.

The elements or parts of elements common to the embodiments described below will be indicated by the same reference numerals.

### DETAILED DESCRIPTION

With reference to the aforesaid figures, reference numeral 4 indicates as a whole an overall view of a light bracket group for industrial vehicles.

The light bracket group 4 comprises a pair of side modules 8, 12 having a main transverse extension X-X; each of said side modules 8, 12 supports at least one light 16 having signalling and/or lighting functions of the industrial vehicle. By way of example, the light can comprise a direction indicator, a position light, a stop light, a reverse light, a side-marker, and the like.

The light bracket group 4 further comprises a central module 20 arranged in an intermediate and contiguous position with respect to said side modules 8, 12.

The central module 20 supports at least one identification plate of the industrial vehicle and preferably a lighting device 24 of said plate. Moreover, the central module 20 can also support further lighting and/or signalling lights and covers thereof.

Each side module 8, 12 is provided with fixing means (not shown) to a chassis of the industrial vehicle, in particular to a bracket of said chassis.

Said fixing means typically comprise screws, bolts, and the like.

The central module 20 in turn is fixed to the side modules 8, 12 by removable fixing means 28. Therefore, the central module 20 is not fixed to the chassis of the industrial vehicle, rather it is hooked and fixed to the side modules 8, 12, as better specified below.

According to the invention, the side modules 8, 12, at inner transverse ends 32, 36 facing the central module 20, have, with respect to a section plane perpendicular to said main transverse extension X-X, a body 40 with a "C"-shaped section having a vertical stretch 44 and two side edges 48 substantially perpendicular to the vertical stretch 44.

The side edges 48 have raised profiles 52 which form transverse sliding rails for corresponding transverse seats 56 of the central module 20.

According to a possible embodiment, said transverse seats 56 of the central module 20 are configured to achieve a shape coupling with said raised profiles 52 of the side edges 48.

According to the invention, the central module 20, with respect to a section plane perpendicular to the main transverse extension X-X, comprises a "C"-shaped section having a vertical element 60 and a pair of horizontal branches 64 delimiting said transverse seats 56.

According to the invention, said horizontal branches 64 of the central module 20 end with hooking appendages 68 configured to form a hook with free ends of the side edges 48 of the inner transverse ends 32, 36 of the side modules 8, 12.

The possible vibrations of the central module 20 that, as seen, is not directly fixed to the chassis of the industrial vehicle, are also eliminated by virtue of such a hook coupling between the free ends of the side edges 48 of the inner transverse ends 32, 36 of the side modules 8, 12 and the hooking appendages 68.

According to a possible embodiment, the central module 20, between the vertical element 60 and said hooking appendages 68, delimits a volume 72 adapted to house said inner transverse ends 32, 36 of the side modules 8, 12.

According to a possible embodiment, in the assembly configuration, the inner transverse ends 32, 36 of the side modules 8, 12 are constrained with undercuts between the hooking appendages 68 and the transverse seats 56 of the central module 20.

According to a possible embodiment, the vertical element 60 of the central module 20 comprises stiffening ribs 76 at a rear face 80 thereof.

For example, said stiffening ribs 76 are arranged along directions mutually crossed and angled with respect to the main transverse extension X-X.

The removable fixing means 28 can comprise screws or pins engaged in slotted holes 84 parallel to said main transverse extension X-X.

According to a possible embodiment, said screws or pins comprise elastically expandable heads or portions.

The method for mounting a light bracket group according to the present invention will now be described.

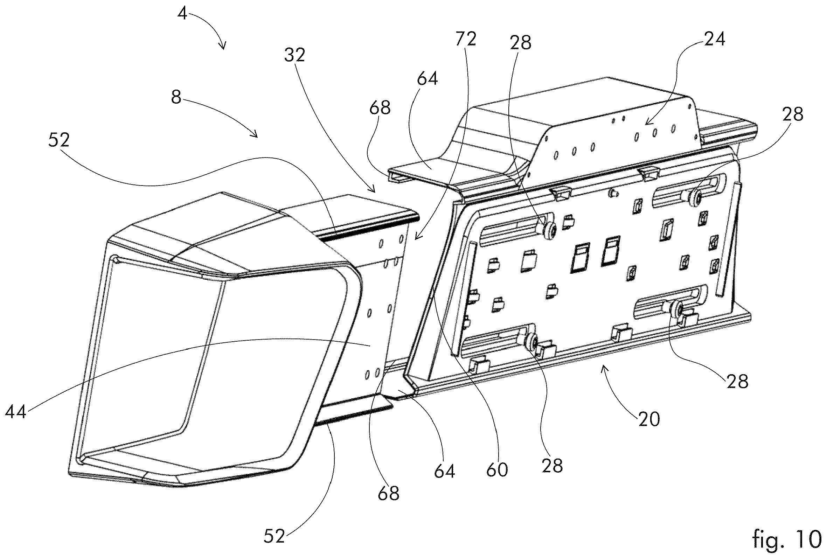

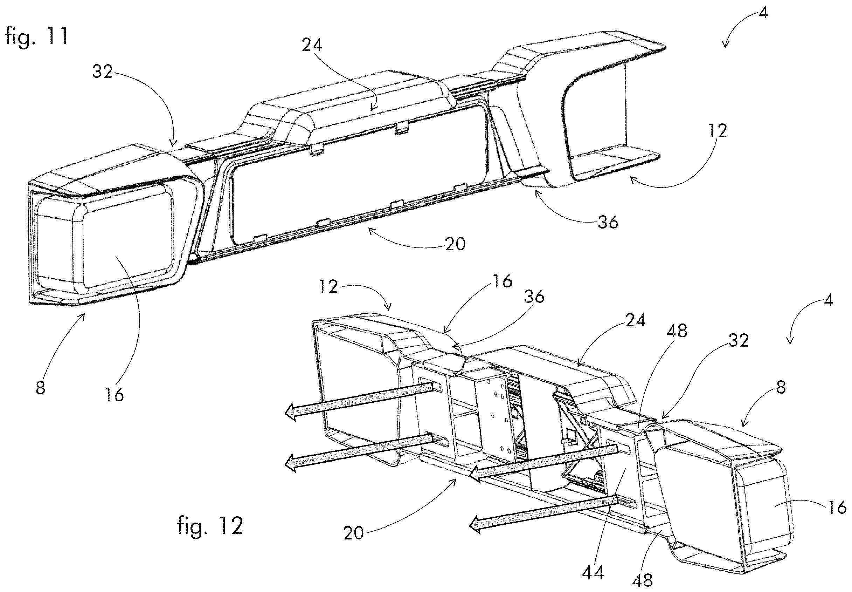

In particular, according to a possible embodiment (Figures 10-12), it is possible to associate the central module 20 with and fix it between said side modules 8, 12 in advance so as to adjust the overall transverse width of the light bracket group 4.

Therefore, each side module 8, 12 is fixed to the rear chassis of the industrial vehicle.

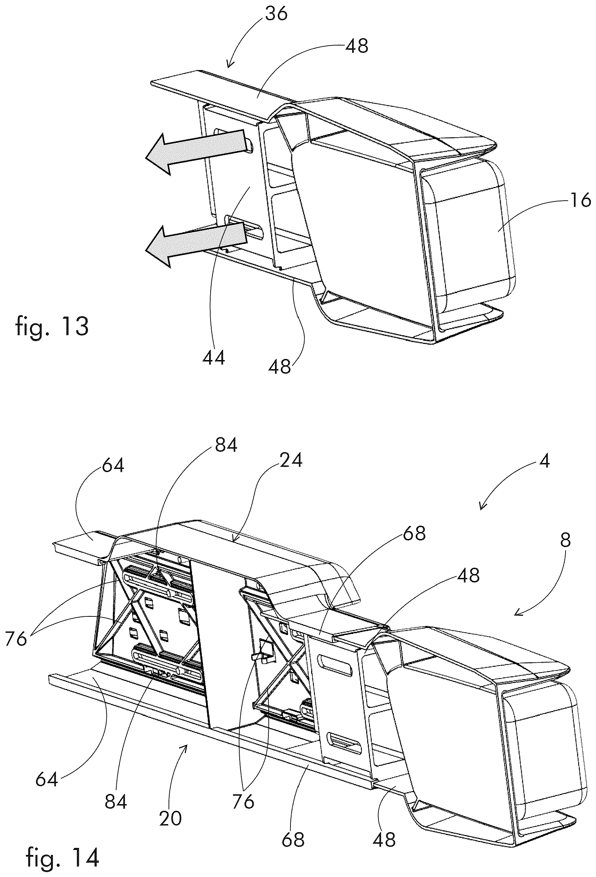

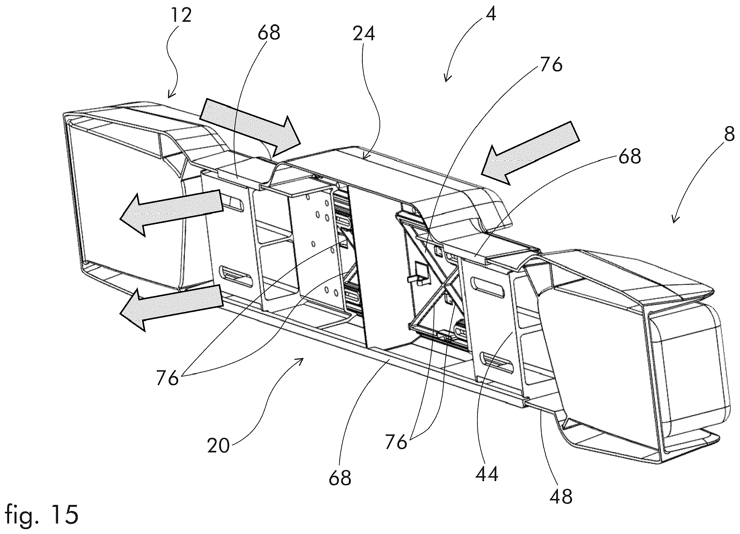

According to a possible embodiment (Figures 13-15), it is possible to fix each side module 8, 12 to a rear chassis of the industrial vehicle, this being followed by associating the central module 20 in an intermediate position between the side modules 8, 12 and fixing it to the inner transverse ends 32, 36 of said side modules 8, 12. Such a method provides for an elastically deformation of the central module 20 until it can be hooked at the back on the inner transverse ends 32, 36 of the side modules 8, 12, with particular reference to the hooking appendages 68.

According to a possible embodiment, it is possible to fix a first side module 8 to a rear chassis of the industrial vehicle and associate the central module 20 with a first inner transverse end 32 of said first side module 8; this being followed by the step of fixing a second side module 12 to the rear chassis of the industrial vehicle and associating it, at a second transverse end 36 thereof, with said central module 20.

As can be appreciated from the above description, the present invention allows overcoming the drawbacks presented in the prior art.

In particular, the present invention allows obtaining the modularity of the components forming the light bracket group, which can thus be adapted to any transverse size of the industrial vehicle.

Moreover, the side modules do not vibrate and do not make noise when travelling, given that they are directly fixed to the chassis of the industrial vehicle.

The central module, which normally has the greater extension within the group, has no structural features that make it compact, and generally the entire light bracket group is significantly lighter than the solutions of the prior art.

The mounting of the light bracket group is also practical and quick. The solution further allows replacing individual modules due to breaks, for example, or even disassembling individual modules for maintenance operations, for example.

In order to meet contingent, specific needs, those skilled in the art may make several changes and variations to the solutions described above.

The scope of protection of the invention is defined by the following claims.

## Claims

1. Light bracket group (4) for industrial vehicles, comprising:
- a pair of side modules (8,12), having a main transverse extension (X-X), said side modules (8,12) supporting at least one light having signalling and/or lighting functions of the industrial vehicle,
- a central module (20) arranged in an intermediate and contiguous position with respect to said side modules (8,12), the central module (20) supporting at least one identification plate of the industrial vehicle,
- wherein each side module (8,12) is provided with fixing means to a chassis of the industrial vehicle,
- wherein the central module (20) is fixed to the side modules (8,12) by removable fixing means (28),
wherein the side modules (8,12), at the inner transverse ends (32,36), facing the central module (20), have, with respect to a section plane perpendicular to said main transverse extension (X-X), a body (40) with a "C" section having a vertical stretch (44) and two side edges (48), substantially perpendicular to the vertical stretch (44), said side edges (48) having raised profiles (52) which create transverse sliding rails for corresponding transverse seats (56) of the central module (20),
**characterized in that**
the central module (20), with respect to a section plane perpendicular to the main transverse extension (X-X), comprises a "C" section having a vertical element (60) and a pair of horizontal branches (64) which delimit said transverse seats (56),
wherein, with respect to a section plane perpendicular to the main transverse extension (X-X), said horizontal branches (64) of the central module (20) end with hooking appendages (68), configured to create a hook with free ends of the side edges (48) of the inner transverse ends (32,36) of the side modules (8,12).

2. Light bracket group (4) for industrial vehicles according to claim 1, wherein said transverse seats (56) of the central module (20) are configured to create a shape coupling with said raised profiles (52).

3. Light bracket group (4) for industrial vehicles according to any one of previous claims, wherein the central module (20), between the vertical element (60) and said hooking appendages (68), delimits a volume (72) adapted to house said inner transverse ends (32,36) of the side modules (8,12).

4. Light bracket group (4) for industrial vehicles according to claim 1, 2 or 3, wherein, in the assembly configuration, the inner transverse ends (32,36) of the side modules (8,12) are constrained with undercuts between the hooking appendages (68) and the transverse seats (56) of the central module (20).

5. Light bracket group (4) for industrial vehicles according to any one of claims 1 to 4, wherein a vertical element (60) of the central module (20) comprises stiffening ribs (76), at a rear face thereof.

6. Light bracket group (4) for industrial vehicles according to claim 5, wherein said stiffening ribs (76) are arranged along directions crossed and angled with each other with respect to the main transverse extension (X-X).

7. Light bracket group (4) for industrial vehicles according to any one of claims 1 to 6, wherein the removable fixing means (28) comprise screws or pins which engage in slotted holes (84) that are parallel to said main transverse extension (X-X).

8. Light bracket group (4) for industrial vehicles according to claim 7, wherein said screws or pins comprise elastically expandable heads or portions.

9. Method for mounting a light bracket group (4) for industrial vehicles, comprising the steps of:
- preparing a light bracket group (4) according to any one of claims 1 to 8,
- associating and fixing the central module (20) between said side modules (8,12) in advance so as to adjust the overall transverse width of the light bracket group (4),
- fixing each side module (8,12) to a rear chassis of the industrial vehicle.

10. Method for mounting a light bracket group (4) for industrial vehicles, comprising the steps of:
- preparing a light bracket group (4) according to any one of claims 1 to 8,
- fixing each side module (8,12) to a rear chassis of the industrial vehicle,
- associating the central module (20) in an intermediate position between the side modules (8,12) and fixing it to the inner transverse ends (32,36) of said side modules (8,12) .

11. Method for mounting a light bracket group (4) for industrial vehicles, comprising the steps of:
- preparing a light bracket group (4) according to any one of claims 1 to 8,
- fixing a first side module (8) to a rear chassis of the industrial vehicle,
- associating the central module (20) to a first inner transverse end (32) of said first side module (8),
- fixing a second side module (12) to a rear chassis of the industrial vehicle and associating it, at a second transverse end (36) thereof, to said central module (20).

## Patentansprüche

1. Lampenhaltergruppe (4) für Industriefahrzeuge, umfassend:
- ein Paar von seitlichen Modulen (8, 12), welche eine transversale Haupterstreckung (X-X) aufweisen, wobei die seitlichen Module (8, 12) wenigstens eine Lampe haltern, welche Signal- und/oder Leuchtfunktionen des Industriefahrzeugs aufweist,
- ein zentrales Modul (20), welches in Bezug auf die seitlichen Module (8, 12) in einer mittleren und angrenzenden Position angeordnet ist, wobei das zentrale Modul (20) wenigstens ein Identifikationsschild des Industriefahrzeugs haltert,
- wobei jedes seitliche Modul (8, 12) mit Befestigungsmitteln für ein Chassis des Industriefahrzeugs bereitgestellt ist,
- wobei das zentrale Modul (20) durch lösbare Befestigungsmittel (28) an den seitlichen Modulen (8, 12) befestigt ist,
wobei die seitlichen Module (8, 12) an den inneren transversalen Enden (32, 36), welche dem zentralen Modul (20) zugewandt sind, in Bezug auf eine zu der transversalen Haupterstreckung (X-X) senkrechte Schnittebene einen Körper (40) mit einem "C"-Querschnitt aufweisen, welcher einen Abschnitt (44) vertikaler Ausdehnung und zwei seitliche Ränder (48) aufweist, welche im Wesentlichen senkrecht zu dem Abschnitt (44) vertikaler Ausdehnung sind, wobei die seitlichen Ränder (48) erhabene Profile (52) aufweisen, welche transversale Gleitschienen für entsprechende transversale Aufnahmen (56) des zentralen Moduls (20) schaffen,
**dadurch gekennzeichnet, dass**
das zentrale Modul (20) in Bezug auf eine zu der transversalen Haupterstreckung (X-X) senkrechte Schnittebene einen "C"-Querschnitt umfasst, welcher ein vertikales Element (60) und ein Paar von horizontalen Abzweigungen (64) aufweist, welche die transversalen Aufnahmen (56) begrenzen,
wobei in Bezug auf eine zu der transversalen Haupterstreckung (X-X) senkrechte Schnittebene die horizontalen Abzweigungen (64) des zentralen Moduls (20) mit Hakenfortsätzen (68) enden, welche dazu eingerichtet sind, einen Haken mit freien Enden der seitlichen Ränder (48) der inneren transversalen Enden (32, 36) der seitlichen Module (8, 12) zu schaffen.

2. Lampenhaltergruppe (4) für Industriefahrzeuge nach Anspruch 1, wobei die transversalen Aufnahmen (56) des zentralen Moduls (20) dazu eingerichtet sind, eine Formkopplung mit den erhabenen Profilen (52) zu schaffen.

3. Lampenhaltergruppe (4) für Industriefahrzeuge nach einem der vorhergehenden Ansprüche, wobei das zentrale Modul (20) zwischen dem vertikalen Element (60) und den Hakenfortsätzen (68) ein Volumen (72) begrenzt, welches dazu eingerichtet ist, die inneren transversalen Enden (32, 36) der seitlichen Module (8, 12) aufzunehmen.

4. Lampenhaltergruppe (4) für Industriefahrzeuge nach Anspruch 1, 2 oder 3, wobei in der Baugruppenkonfiguration die inneren transversalen Enden (32, 36) der seitlichen Module (8, 12) mit Hinterschneidungen zwischen den Hakenfortsätzen (68) und den transversalen Aufnahmen (56) des zentralen Moduls (20) in Zwangsverbindung stehen.

5. Lampenhaltergruppe (4) für Industriefahrzeuge nach einem der Ansprüche 1 bis 4, wobei ein vertikales Element (60) des zentralen Moduls (20) an einer hinteren Fläche davon Versteifungsrippen (76) umfasst.

6. Lampenhaltergruppe (4) für Industriefahrzeuge nach Anspruch 5, wobei die Versteifungsrippen (76) entlang in Bezug auf die transversale Haupterstreckung (X-X) gekreuzten und winklig angeordneten Richtungen angeordnet sind.

7. Lampenhaltergruppe (4) für Industriefahrzeuge nach einem der Ansprüche 1 bis 6, wobei die lösbaren Befestigungsmittel (28) Schrauben oder Stifte umfassen, welche in Langlöcher (84) eingreifen, die parallel zu der transversalen Haupterstreckung (X-X) sind.

8. Lampenhaltergruppe (4) für Industriefahrzeuge nach Anspruch 7, wobei die Schrauben oder Stifte elastisch ausdehnbare Köpfe oder Abschnitte umfassen.

9. Verfahren zum Montieren einer Lampenhaltergruppe (4) für Industriefahrzeuge, umfassend die folgenden Schritte:
- Vorbereiten einer Lampenhaltergruppe (4) nach einem der Ansprüche 1 bis 8,
- Zuordnen und Befestigen des zentralen Moduls (20) zwischen den seitlichen Modulen (8, 12) im Voraus, um die gesamte transversale Breite der Lampenhaltergruppe (4) anzupassen,
- Befestigen jedes seitlichen Moduls (8, 12) an einem hinteren Chassis des Industriefahrzeugs.

10. Verfahren zum Montieren einer Lampenhaltergruppe (4) für Industriefahrzeuge, umfassend die folgenden Schritte:
- Vorbereiten einer Lampenhaltergruppe (4) nach einem der Ansprüche 1 bis 8,
- Befestigen jedes seitlichen Moduls (8, 12) an einem hinteren Chassis des Industriefahrzeugs,
- Zuordnen des zentralen Moduls (20) in einer Zwischenposition zwischen den seitlichen Modulen (8, 12) und Befestigen desselben an den inneren transversalen Enden (32, 36) der seitlichen Module (8, 12).

11. Verfahren zum Montieren einer Lampenhaltergruppe (4) für Industriefahrzeuge, umfassend die folgenden Schritte:
- Vorbereiten einer Lampenhaltergruppe (4) nach einem der Ansprüche 1 bis 8,
- Befestigen eines ersten seitlichen Moduls (8) an einem hinteren Chassis des Industriefahrzeugs,
- Zuordnen des zentralen Moduls (20) einem ersten inneren transversalen Ende (32) des ersten seitlichen Moduls (8),
- Befestigen eines zweiten seitlichen Moduls (12) an einem hinteren Chassis des Industriefahrzeugs und Zuordnen desselben, an einem zweiten transversalen Ende (36) davon, dem zentralen Modul (20).

## Revendications

1. Groupe de support de feu (4) pour véhicules industriels, comprenant :
- une paire de modules latéraux (8, 12), présentant une extension transversale principale (X-X), lesdits modules latéraux (8, 12) supportant au moins un feu présentant des fonctions de signalisation et/ou d'éclairage du véhicule industriel,
- un module central (20) agencé dans une position intermédiaire et contiguë par rapport auxdits modules latéraux (8, 12), le module central (20) supportant au moins une plaque d'identification du véhicule industriel,
- dans lequel chaque module latéral (8, 12) est pourvu de moyens de fixation à un châssis du véhicule industriel,
- dans lequel le module central (20) est fixé aux modules latéraux (8, 12) par des moyens de fixation amovibles (28),
dans lequel les modules latéraux (8, 12), au niveau des extrémités transversales intérieures (32, 36), faisant face au module central (20), présentent, par rapport à un plan en coupe perpendiculaire à ladite extension transversale principale (X-X), un corps (40) ayant une coupe en « C » présentant un étirement vertical (44) et deux bords latéraux (48), sensiblement perpendiculaires à l'étirement vertical (44), lesdits bords latéraux (48) présentant des profils surélevés (52) qui créent des rails de coulissement transversaux pour des sièges transversaux (56) correspondants du module central (20),
**caractérisé en ce que**
le module central (20), par rapport à un plan en coupe perpendiculaire à l'extension transversale principale (X-X), comprend une coupe en « C » présentant un élément vertical (60) et une paire de branches horizontales (64) qui délimitent lesdits sièges transversaux (56),
dans lequel, par rapport à un plan en coupe perpendiculaire à l'extension transversale principale (X-X), lesdites branches horizontales (64) du module central (20) se terminent par des appendices d'accrochage (68), configurés pour créer un crochet avec les extrémités libres des bords latéraux (48) des extrémités transversales intérieures (32, 36) des modules latéraux (8, 12).

2. Groupe de support de feu (4) pour véhicules industriels selon la revendication 1, dans lequel lesdits sièges transversaux (56) du module central (20) sont configurés pour créer un couplage de forme avec lesdits profils surélevés (52).

3. Groupe de support de feu (4) pour véhicules industriels selon l'une quelconque des revendications précédentes, dans lequel le module central (20), entre l'élément vertical (60) et lesdits appendices d'accrochage (68), délimite un volume (72) adapté pour loger lesdites extrémités transversales intérieures (32, 36) des modules latéraux (8, 12).

4. Groupe de support de feu (4) pour véhicules industriels selon la revendication 1, 2 ou 3, dans lequel, dans la configuration d'assemblage, les extrémités transversales intérieures (32, 36) des modules latéraux (8, 12) sont contraintes avec des contre-dépouilles entre les appendices d'accrochage (68) et les sièges transversaux (56) du module central (20).

5. Groupe de support de feu (4) pour véhicules industriels selon l'une quelconque des revendications 1 à 4, dans lequel un élément vertical (60) du module central (20) comprend des nervures de renforcement (76) au niveau d'une face arrière de celui-ci.

6. Groupe de support de feu (4) pour véhicules industriels selon la revendication 5, dans lequel lesdites nervures de renforcement (76) sont agencées dans des directions en intersection et formant un angle les unes avec les autres par rapport à l'extension transversale principale (X-X).

7. Groupe de support de feu (4) pour véhicules industriels selon l'une quelconque des revendications 1 à 6, dans lequel les moyens de fixation amovibles (28) comprennent des vis ou des broches qui s'engagent dans des trous fendus (84) qui sont parallèles à ladite extension transversale principale (X-X).

8. Groupe de support de feu (4) pour véhicules industriels selon la revendication 7, dans lequel lesdites vis ou broches comprennent des têtes ou parties élastiquement extensibles.

9. Procédé de montage d'un groupe de support de feu (4) pour véhicules industriels, comprenant les étapes suivantes :
- la préparation d'un groupe de support de feu (4) selon l'une quelconque des revendications 1 à 8,
- l'association et la fixation à l'avance du module central (20) entre lesdits modules latéraux (8, 12) de manière à ajuster la largeur transversale hors tout du groupe de support de feu (4),
- la fixation de chaque module latéral (8, 12) à un châssis arrière du véhicule industriel.

10. Procédé de montage d'un groupe de support de feu (4) pour véhicules industriels, comprenant les étapes suivantes :
- la préparation d'un groupe de support de feu (4) selon l'une quelconque des revendications 1 à 8,
- la fixation de chaque module latéral (8, 12) à un châssis arrière du véhicule industriel,
- l'association du module central (20) dans une position intermédiaire entre les modules latéraux (8, 12) et la fixation de celui-ci aux extrémités transversales intérieures (32, 36) desdits modules latéraux (8, 12).

11. Procédé de montage d'un groupe de support de feu (4) pour véhicules industriels, comprenant les étapes suivantes :
- la préparation d'un groupe de support de feu (4) selon l'une quelconque des revendications 1 à 8,
- la fixation d'un premier module latéral (8) à un châssis arrière du véhicule industriel,
- l'association du module central (20) à une première extrémité transversale intérieure (32) dudit premier module latéral (8),
- la fixation d'un second module latéral (12) à un châssis arrière du véhicule industriel et l'association de celui-ci, au niveau d'une seconde extrémité transversale (36) de celui-ci, audit module central (20).
